# EUROPEAN PATENT SPECIFICATION

(11) **EP 3 750 698 B1**
(45) Date of publication and mention of the grant of the patent: **18.05.2022**
(21) Application number: 19860626.1
(22) Date of filing: 19.03.2019
(51) Int. Cl.: B29C 73/10, B29C 70/54, B29C 70/34

(54) **REPAIR PATCH, REPAIR PATCH MOLDING METHOD, AND REPAIR METHOD FOR COMPOSITE MATERIAL**
REPARATURPFLASTER, REPARATURPFLASTERFORMVERFAHREN UND REPARATURVERFAHREN FÜR VERBUNDMATERIAL
TIMBRE DE RÉPARATION, PROCÉDÉ DE MOULAGE DE TIMBRE DE RÉPARATION ET PROCÉDÉ DE RÉPARATION POUR MATÉRIAU COMPOSITE

(30) Priority: 12.09.2018 JP 2018170822
(43) Date of publication of application: 16.12.2020
(73) Proprietor: MITSUBISHI HEAVY INDUSTRIES, LTD., Chiyoda-ku, Tokyo 100-8332 (JP)
(72) Inventor: SHIMONO, Kodai, Tokyo 100-8332 (JP); HASEGAWA, Koichi, Tokyo 100-8332 (JP); HIRAI, Takuma, Tokyo 100-8332 (JP)
(74) Representative: Henkel & Partner mbB
(86) International application number: PCT/JP2019/011536
(87) International publication number: WO 2020/054111

(56) References cited:
- WO-A1-2017/081456
- JP-A- 2011 173 322
- JP-A- 2013 512 808
- JP-A- 2018 114 721
- JP-A- 2018 114 721
- US-A1- 2014 141 190
- US-A1- 2016 159 057

## Description

### Technical Field

The present invention relates to a repair patch for a composite material adapted to repair a portion to be repaired of the composite material, a method for molding a repair patch, and a method for repairing a composite material.

### Background Art

In the related art, as a repairing method for repairing a portion to be repaired such as a damaged portion of a composite material, there is known a composite material repairing method including removing a frustum-shaped section having a diameter increasing from a back surface toward a front surface of a composite material, and bonding a repair material to a recess formed by the removing (for example, see Patent Document 1).

### Citation List

### Patent Literature

Patent Document 1: JP 6124561 B (US 2014/141190 A1)

### Summary of Invention

### Technical Problem

As a repair material to be bonded to a counterbore such as a recess, there is, for example, a repair patch such as in Patent Document 1. The repair patch has a truncated cone shape and includes a bottom surface, a top surface, and an inclined surface. Reinforcing fiber base materials of circular shapes having different diameters are concentrically layered on one another, and thus the repair patch having a truncated cone shape is molded.

However, when the reinforcing fiber base materials are laminated on one another to form the repair patch, there is a problem of fiber meandering (wrinkles) that may occur at a corner portion that is a so-called edge portion formed by the bottom surface and the inclined surface. When a portion to be repaired is repaired by using such a repair patch, it is difficult to sufficiently recover the strength of the portion to be repaired, as compared with strength provided before the composite material is damaged.

Therefore, an object of the present invention is to provide a repair patch molded into an appropriate shape in which the occurrence of fiber meandering is suppressed, a method for molding a repair patch, and a method for repairing a composite material.

### Solution to Problem

A repair patch according to the present invention is a repair patch for a composite material adapted to repair a portion to be repaired of the composite material, the repair patch including: a patch body including a bonding surface to be bonded to the portion to be repaired; and an expected margin disposed at an opposite side to the bonding surface in a thickness direction of the patch body, and being debondable from the patch body. The bonding surface includes an inclined surface inclined outward from the patch body toward the expected margin in the thickness direction of the patch body. The inclined surface is formed to extend from the patch body onto the expected margin, and the patch body has a surface bonded to the expected margin, the surface being a boundary surface between the patch body and the expected margin that is debondable.

According to such a configuration, even in a case where the thickness of an end portion at the edge side (outer side) of the patch body is small, the thickness can be increased by increasing the thickness of the expected margin. Accordingly, when the inclined surface is formed in the patch body, the inclined surface can be formed while the thickness and rigidity are ensured by the expected margin. Accordingly, dimensional accuracy at the time of machining can be stabilized. In addition, the end portion at the edge side of the patch body can be protected by the expected margin.

In addition, in the repair patch, the expected margin may be made of a peel ply, and the patch body is made of prepregs.

According such a configuration, the peel ply bonded to the patch body can be applied as a portion of the expected margin. In addition, the expected margin can be peeled easily from the patch body by the peel ply portion.

In addition, preferably, the repair patch further includes a bonding layer provided between the patch body and the expected margin to bond the patch body and the expected margin, and the bonding layer includes an adhesive agent enabling the expected margin to be peeled from the patch body at the time of peeling.

According to such a configuration, in a case where the patch body and the expected margin are separately molded to be bonded, the patch body and the expected margin can be bonded via the adhesive agent, while at the time of peeling, the expected margin can be peeled from the patch body. Note that examples of the adhesive agent include a fluororesin-based adhesive agent or an acrylic resin-based adhesive agent.

In addition, preferably, the repair patch further includes a release layer provided in the inclined surface formed in the expected margin, and the release layer enables peeling of an adhesive used in bonding to the portion to be repaired.

According to such a configuration, bonding of the expected margin to the portion to be repaired is suppressed by the release layer. Note that the release layer is, for example, an adhesive tape using a fluororesin such as Teflon (registered trademark).

In the repair patch, a boundary surface between the patch body and the expected margin is a surface orthogonal to the thickness direction. A taper ratio of an angle formed by the boundary surface and the inclined surface is expressed as "L:D" where a thickness in the thickness direction of the patch body is D and a length in an in-plane direction along the boundary surface is L. When the thickness D is 1, the length L is preferably not less than 10.

According to such a configuration, the shape of the patch body can be a shape suitable for recovering the strength of the portion to be repaired. In addition, even in such a shape, the occurrence of fiber meandering in the end portion at the edge side of the patch body can be suppressed. Note that in a case where the length L is not less than 30, the occurrence of fiber meandering can further be suppressed.

A method for molding a repair patch according to the present invention is a method for molding a repair patch for a composite material adapted to repair a portion to be repaired of the composite material. The method includes: the bonding step of integrally bonding, to a laminate including a plurality of reinforcing fiber base materials layered on one another in a thickness direction, an expected margin debondable from the laminate, such that the expected margin is disposed at one side in the thickness direction of the laminate; and the machining step of forming an inclined surface inclined outward from the laminate toward the expected margin in the thickness direction. At the machining step, the inclined surface is formed to extend from the laminate onto the expected margin.

According to such a configuration, the inclined surface can be formed in the patch body while strength is ensured by the expected margin. Accordingly, the occurrence of fiber meandering in the end portion at the edge side of the patch body can be suppressed. Accordingly, the repair patch having an appropriate shape can be molded.

A composite material repairing method according the present invention is a composite material repairing method for repairing a portion to be repaired of a composite material, and in the composite material repairing method, the repair patch described above is prepared in advance. The composite material repairing method includes: the adhesive arrangement step of disposing an adhesive in a surface to be bonded of the portion to be repaired; the patch arrangement step of disposing the bonding surface of the repair patch via the adhesive such that the bonding surface is disposed being opposed to the surface to be bonded; the bonding step of bonding the repair patch to the portion to be repaired; and the peeling step of peeling the expected margin of the repair patch from the patch body.

According to such a configuration, in a state where the end portion at the edge side of the patch body is protected, the patch body can be bonded to the portion to be repaired, and then, the expected margin can be peeled. Accordingly, the patch body can be bonded to the portion to be repaired while the occurrence of fiber meandering in the end portion at the edge side of the patch body is suppressed.

In addition, a composite material repairing method according to the present invention is a composite material repairing method for repairing a portion to be repaired of a composite material, the composite material repairing method including, with a repair kit being prepared in advance, and the repair kit including an expected margin debondable from a laminate including a plurality of reinforcing fiber base materials layered on one another in a thickness direction such that the expected margin is bonded to the laminate to be disposed at one side in the thickness direction of the laminate: the machining step of forming an inclined surface inclined outward from the laminate toward the expected margin in the thickness direction, and forming the inclined surface to extend from the laminate onto the expected margin, to form a bonding surface including the inclined surface; the adhesive arrangement step of disposing an adhesive in a surface to be bonded of the portion to be repaired; a kit arrangement step of disposing the bonding surface of the repair kit machined in the surface to be bonded via the adhesive such that the bonding surface is disposed being opposed to the bonded surface; the bonding step of bonding the repair kit to the portion to be repaired; and the peeling step of peeling the expected margin of the repair kit from the laminate.

According to such a configuration, depending on the shape of the portion to be repaired, the bonding surface including the inclined surface of the repair kit can be machined, and thus the bonding surface conforming to the shape of the portion to be repaired can be formed. In addition, the inclined surface can be formed in the laminate while strength is ensured by the expected margin. Accordingly, the occurrence of fiber meandering in the end portion at the edge side of the laminate can be suppressed.

### Brief Description of Drawings

FIG. 1 is a cross-sectional view schematically illustrating an example of a repair patch according to a first embodiment.
FIG. 2 is a cross-sectional view schematically illustrating another example of a repair patch according to the first embodiment.
FIG. 3 is an explanatory diagram illustrating a method for molding the repair patch according to the first embodiment.
FIG. 4 is an explanatory diagram of an example of a method for repairing a composite material by using the repair patch according to the first embodiment.
FIG. 5 is an explanatory diagram of another example of a method for repairing a composite material by using the repair patch according to the first embodiment.
FIG. 6 is a graph on the result of repairing of a portion to be repaired that has been repaired with the repair patch according to the first embodiment.
FIG. 7 is a cross-sectional view schematically illustrating an example of a repair patch according to a second embodiment of the present invention.

### Description of Embodiments

Detailed description of embodiments according to the present invention will be given below with reference to the drawings. Note that the present invention is not limited by the embodiments. In addition, constituent elements in the following embodiments include those that can be replaced easily by a person skilled in the art or those that are substantially the same. Further, the constituent elements described below can be combined as appropriate, and in the case of a plurality of embodiments, the embodiments can be combined with one another.

### First Embodiment

A repair patch 10 according to the present embodiment is a repair material used in repairing a composite material. A method for repairing a composite material by using the repair patch 10 is directed to repairing a defective portion caused by a damage or the like formed in the composite material, and is a method for repairing this portion to be repaired.

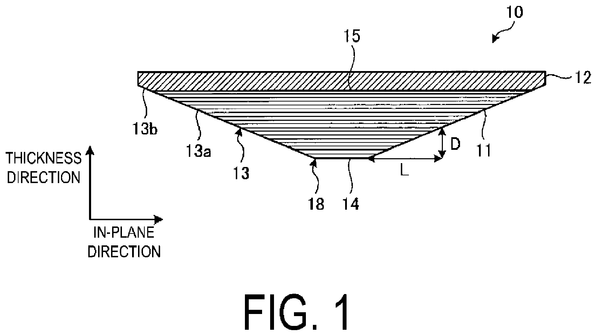

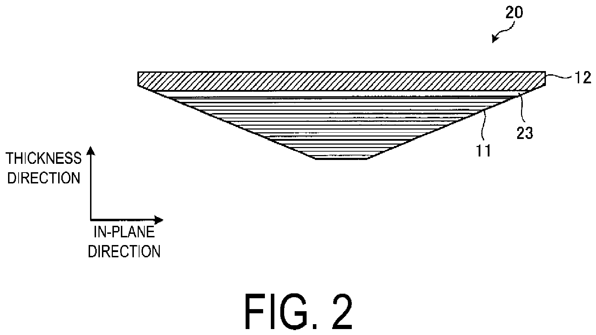

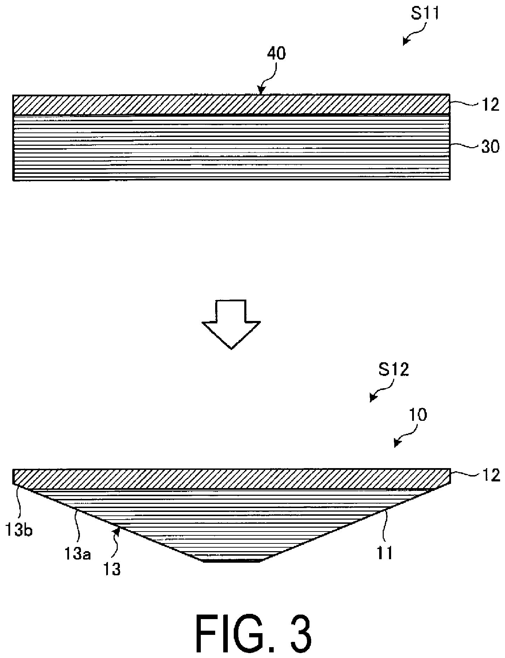

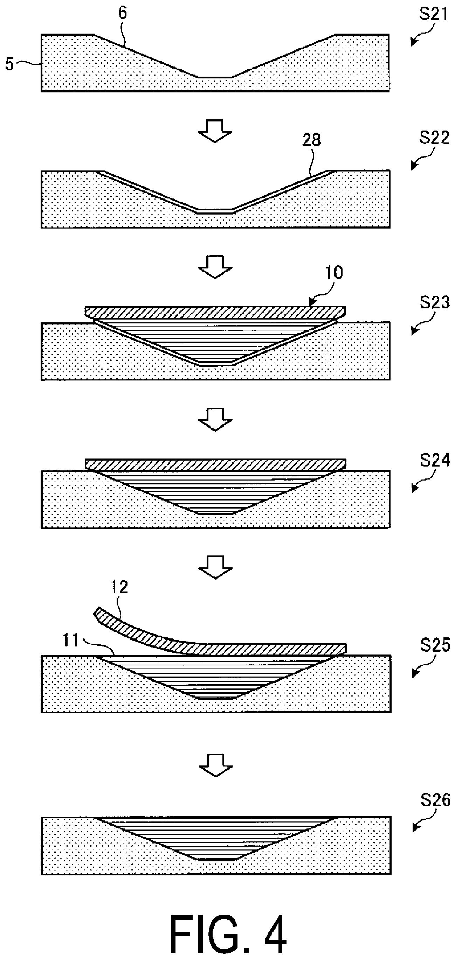

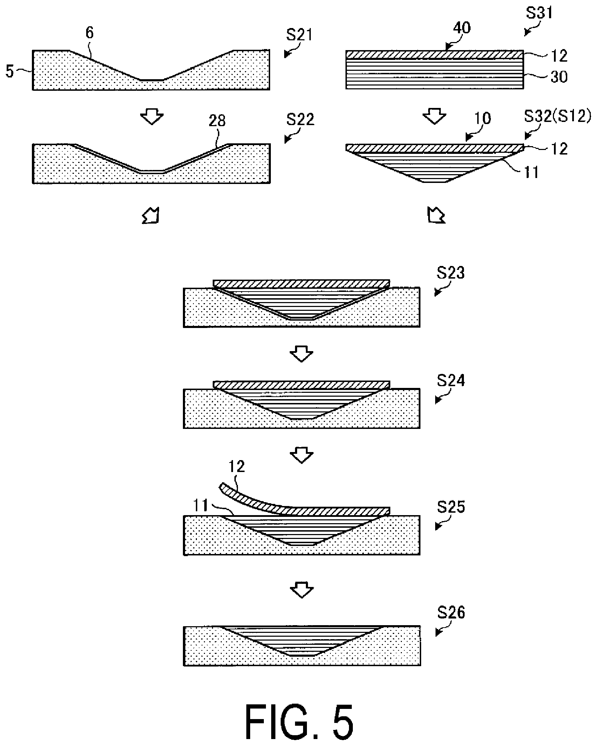

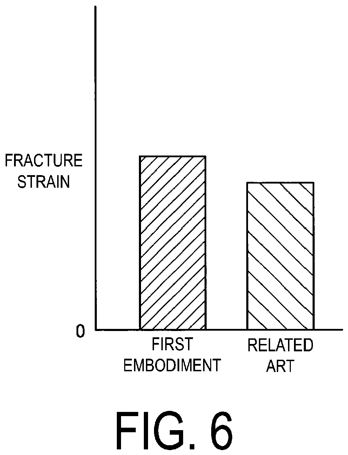

FIGS. 1 and 2 are cross-sectional views schematically illustrating an example of a repair patch according to a first embodiment. FIG. 3 is an explanatory diagram illustrating a method for molding the repair patch according to the first embodiment FIGS. 4 and 5 are explanatory diagrams of an example of a method for repairing a composite material by using the repair patch according to the first embodiment. FIG. 6 is a graph on the result of repairing of a portion to be repaired 5 that has been repaired with the repair patch according to the first embodiment.

First, the repair patch 10 will be described with reference to FIG. 1. The repair patch 10 is made of a composite material and includes a patch body 11 and an expected margin 12.

The patch body 11 has a truncated cone shape including a bottom surface 15, a top surface 14, and side surfaces 13a. In the patch body 11, the top surface 14 and the side surfaces 13a is a bonding surface 18 to be bonded to a portion to be repaired, and the bottom surface 15 is an opposite surface to the bonding surface 18.

The patch body 11 includes a plurality of prepregs as reinforcing fiber base materials laminated on one another in the thickness direction to be temporarily cured (pre-cured). Note that the direction along a plane orthogonal to the thickness direction is the in-plane direction. The prepregs is a material obtained by impregnating reinforcing fibers with a resin. For example, carbon fibers are used as the reinforcing fibers; however, the reinforcing fibers are not limited to carbon fibers. Other fibers of plastic fibers, glass fibers, natural fibers, or metal fibers may be used as the reinforcing fibers. A thermosetting resin is preferable as the resin. Alternatively, a thermoplastic resin may be used. An example of the thermosetting resin includes an epoxy resin. Examples of the thermoplastic resin include polyether ether ketone (PEEK), polyether ketone ketone (PEKK), and polyphenylene sulfide (PPS). Note that the resin is not limited to these resins, and other resins may be used. In addition, a method such as hand lay-up, resin infusion, resin transfer molding (RTM), or the like may be applied other than the molding by using the prepregs.

Specifically, the patch body 11 is the patch body 11 having a truncated cone shape obtained by machining a plate-shaped laminate including a plurality of prepregs laminated on one another and temporarily cured (pre-curing).

The bonding surface 18 includes the top surface 14 and the side surfaces 13a. In the bonding surface 18, at the cross section illustrated in FIG. 1 cut in the thickness direction of the patch body 11 along the central axis of the patch body 11 having a truncated cone shape, the side surfaces 13a are located at both sides in the in-plane direction between which the top surface 14 is interposed. Each of the side surfaces 13a is a surface linearly inclined with respect to the thickness direction. That is, in the cross section illustrated in FIG. 1, the side surfaces 13a at both the sides are inclined outward from the patch body 11 toward the expected margin 12 in the thickness direction. Note that each of the side surfaces 13a is a portion of an inclined surface 13 formed extending from the patch body 11 onto the expected margin 12.

The bottom surface 15 is a boundary surface between the patch body 11 and the expected margin 12 and is a surface extending in the in-plane direction. The patch body 11 has a corner portion (an edge portion) formed by the bottom surface 15 and each of the side surfaces 13a. Here, the inclined surface 13 including the side surface 13a has a predetermined taper ratio. When a thickness in the thickness direction of the patch body 11 is D and a length in the in-plane direction along the boundary surface is L, the taper ratio is expressed as "L:D". The taper ratio of the inclined surface 13 in the first embodiment is such that when the thickness D is 1, the length L is not less than 10, and specifically, when the thickness D is 1, the length L is 30.

According to the taper ratio, as a ratio of the length L to the thickness D is larger, the recovery in strength of a portion to be repaired with the patch body 11 of the repair patch 10 can further be improved. Accordingly, the corner portion formed by the bottom surface 15 and the side surface 13a of the patch body 11 preferably has a more acute angle. On the other hand, when the corner portion of the patch body 11 is acute, fiber meandering easily occurs at the corner portion. Thus, the expected margin 12 described below is provided in the first embodiment.

The expected margin 12 is provided at the opposite side to the bonding surface 18 of the patch body 11 in the thickness direction, that is, is provided at the bottom surface 15 side of the patch body 11. The expected margin 12 is bonded to the patch body 11 and is debondable from the patch body 11. The expected margin 12 is made of, for example, a peel ply. In the repair patch 10 illustrated in FIG. 1, a peel ply is applied as the expected margin 12, and thus the expected margin 12 is integrally bonded to the patch body 11. Note that the expected margin 12 is not particularly limited to a peel ply, and any material may be used as the expected margin as long as the material is a material to be bonded to the patch body 11 and to be debondable form the patch body 11.

The expected margin 12 includes inclined surfaces 13b continuously formed with the side surfaces 13a of the patch body 11 to which the expected margin 12 is bonded. Each of the inclined surfaces 13b is a surface linearly inclined with respect to the thickness direction, and the inclined surfaces 13b are formed at both sides in the in-plane direction in the cross section illustrated in FIG. 1. That is, in the cross section illustrated in FIG. 1, the inclined surfaces 13b at both the sides are inclined outward from the patch body 11 toward the expected margin 12 in the thickness direction. Each of the inclined surfaces 13b is a portion of the inclined surface 13 formed extending from the patch body 11 onto the expected margin 12.

Next, another example of a repair patch 20 will be described with reference to FIG. 2. The repair patch 20 includes a patch body 11, an expected margin 12, and a bonding layer 23 provided between the patch body 11 and the expected margin 12. Note that the patch body 11 and the expected margin 12 are the same as those of the repair patch 10 illustrated in FIG. 1 and thus will not be described.

The bonding layer 23 bonds the patch body 11 and the expected margin 12. The bonding layer 23 bonds the expected margin 12 to the patch body 11, and the expected margin 12 is debondable from the patch body 11. The bonding layer 23 includes an adhesive agent. For example, a fluororesin-based adhesive agent or an acrylic resin-based adhesive agent is applied as the adhesive agent. In a case where the bonding layer 23 is provided, the patch body 11 and the expected margin 12 can be molded separately. Accordingly, the expected margin 12 is not limited to a peel ply, and any material may be applied.

Next, a method for molding the repair patch 10 of FIG. 1 will be described with reference to FIG. 3. In the method for molding the repair patch 10, a laminate 30 temporarily cured is machined, and thus the repair patch 10 is formed. Note that, in the molding method of FIG. 3, description will be given by applying the repair patch 10 of FIG. 1; however, the same can apply to the repair patch 20 of FIG. 2.

As illustrated in FIG. 3, the laminate 30 including a plurality of reinforcing fiber base materials layered on one another in the thickness direction, and the expected margin 12 are integrally bonded to form a repair kit 40 (step S11: bonding step). The repair kit 40 is the repair patch 10 obtained before machining. The laminate 30 has a plate shape, and the expected margin 12 also has a plate shape. At the bonding step S11, the expected margin 12 is bonded to a surface of the laminate 30 that is the bottom surface 15 side of the patch body 11. At the bonding step S11, during the temporary curing of the laminate 30, the expected margin 12 may temporarily be cured at the same time and thus may be bonded to the laminate body 30. Alternatively, the laminate body 30 and the expected margin are separately and temporarily cured and then may be bonded together. The way to bond the laminate body and the expected margin is not particularly limited.

Subsequently, the repair kit 40 temporarily cured is machined to form the inclined surfaces 13 inclined outward from the laminate 30 toward the expected margin 12 in the thickness direction (step S12: machining step). At the machining step S12, the inclined surfaces 13 are formed extending from the laminate body 30 onto the expected margin 12. Thus, the repair kit 40 is formed as the repair patch 10. That is, at the machining step S12, the side surfaces 13a of the patch body 11 of the repair patch 10 are formed, and the inclined surfaces 13b are formed in the expected margin 12.

Next, an example of a method for repairing a composite material including a portion to be repaired by using the repair patch 10 described above will be described with reference to FIG. 4. Note that similarly, in the method for repairing in FIG. 4, description will be given by applying the repair patch 10 of FIG. 1; however, the same can apply to the repair patch 20 of FIG. 2.

In the method for repairing a composite material, the repair patch 10 described above and a resin sheet 28 as an adhesive are used. The resin sheet 28 is a material obtained by forming a resin in a sheet shape, and the resin sheet 28 is a material that can be bonded to a resin used in the repair patch 10. Note that the resin sheet 28 may be the same as or different from the resin used in the repair patch 10 and is not particularly limited. In addition, a plurality of repair patches 10 having different diameters are prepared, and the repair patches 10 are appropriately selected and used depending on the shape (size) of a counterbore 6 described below to be formed.

First, a defective portion formed in the composite material is machined by cutting or the like to form the counterbore 6 having the shape illustrated in FIG. 4 (step S21). In the counterbore 6, an opening has a circular shape and a bottom surface is formed in a circular shape smaller than the opening. In addition, side surfaces of the counterbore 6 are surfaces inclined outward from the bottom surface toward the opening. In the counterbore 6, the bottom surface and the side surfaces is a surface to be bonded to which the repair patch 10 is to be bonded.

Subsequently, the resin sheet 28 is disposed in an inner surface including the bottom surface and the side surfaces of the counterbore 6 formed as a recess (step S22: adhesive arrangement step). Specifically, at the adhesive arrangement step S22, the resin sheet 28 is disposed being in contact with the inner surface of the counterbore 6 to cover the surfaces.

Next, the repair patch 10 is disposed on the resin sheet 28 while the bonding surface 18 of the repair patch 10 is disposed being opposed to the inner surface that is the surface to be bonded of the counterbore 6 (step S23: patch arrangement step). Note that, at the patch arrangement step S23, marking is applied to a surface of the expected margin 12 of the repair patch 10, and marking is applied to a surface of the composite material that is the portion to be repaired 5. Thus, the repair patch 10 may be disposed in the counterbore 6 to be appropriately positioned with respect to the counterbore 6.

Subsequently, the repair patch 10 and the resin of the resin sheet 28 are melted, and thus the repair patch 10 is bonded to the counterbore 6 (step S24: bonding step). Note that at the bonding step S24, although not illustrated, the repair patch 10 and the resin sheet 28 are hermetically sealed by using a bag film or the like, and while the inside of the sealed space is evacuated, the repair patch 10 and the resin sheet 28 are heated and are completely cured.

After the curing, the expected margin 12 of the repair patch 10 is debonded from the patch body 11 (step S25: debonding step). At the debonding step S25, the expected margin 12 is peeled from the patch body 11, and thus the bottom surface 15 of the patch body 11 is exposed. Then, a finishing process is performed on a surface of the composite material 1 that is a portion to be repaired and on the bottom surface 15 of the patch body 11 (step S26), and thus the portion to be repaired 5 is repaired.

Next, another example of a method for repairing a composite material including a portion to be repaired by using a repair kit 40 that is the repair patch 10 obtained before machining, will be described with reference to FIG. 5. Note that similarly, in the method for repairing of FIG. 5, description will be given by applying the repair patch 10 of FIG. 1; however, the same can apply to the repair patch 20 of FIG. 2. Note that in the method for repairing a composite material of FIG. 5, description of portions similar to those in the method for repairing of FIG. 4 will be omitted, and the same steps as the steps in the method for repairing of FIG. 4 will be described with the same reference signs.

First, a defective portion formed in a composite material is machined by cutting or the like to form the counterbore 6 having the shape illustrated in FIG. 4 (step S21). Subsequently, the resin sheet 28 is disposed in the inner surface including the bottom surface and the side surfaces of the counterbore 6 formed as a recess (step S22: adhesive arrangement step).

The repair kit 40 including the laminate 30 and the expected margin 12 integrally bonded is prepared before or after steps S21 and S22 (step S31). Subsequently, the repair kit 40 is machined in the same manner as at step S12 to form the inclined surfaces 13 inclined outward from the laminate 30 toward the expected margin 12 in the thickness direction, and thus the repair kit 40 is formed as the repair patch 10 (step S32).

Next, the repair patch 10 is disposed on the resin sheet 28 while the bonding surface 18 of the repair patch 10 is opposed to the inner surface that is a surface to be bonded of the counterbore 6 (step S23: patch arrangement step). Subsequently, the repair patch 10 and the resin of the resin sheet 28 are melted, and thus the repair patch 10 is bonded to the counterbore 6 (step S24: bonding step). After the bonding, the expected margin 12 of the repair patch 10 is debonded from the patch body 11 (step S25: debonding step). Then, a finishing process is performed on the surface of the composite material 1 that is a portion to be repaired and the bottom surface 15 of the patch body 11 (step S26), and thus the portion to be repaired 5 is repaired.

Next, the result of repairing of the portion to be repaired 5 that has been repaired with the repair patch 10, 20 will be described with reference to FIG. 6. Fracture strain is indicated on the vertical axis in FIG. 6. Note that, in the related art, fiber meandering has occurred at a corner portion (an edge portion) of a repair patch used for repairing a portion to be repaired. When fracture strain in the related art is compared with fracture strain in the first embodiment, it is confirmed that the fracture strain in the first embodiment is greater than the fracture strain in the related art. That is, it is confirmed that the portion to be repaired 5 is repaired with the repair patch 10, 20 of the first embodiment, and thus the recovery in strength is great, as compared with the related art.

As described above, according to the first embodiment, even in a case where the edge side (outer side) of the patch body 11 has a small thickness, the thickness can be increased by the expected margin 12. Accordingly, when the side surfaces 13a are formed in the patch body 11, the inclined surfaces 13 can be formed while strength is secured by the expected margin 12. Accordingly, the occurrence of fiber meandering in an end portion at the edge side of the patch body 11 can be suppressed. In addition, the end portion at the edge side of the patch body 11 can be protected by the expected margin 12.

In addition, according to the first embodiment, in the repair patch 10 of FIG. 1, the expected margin 12 is a peel ply, and thus the expected margin 12 can be peeled easily from the patch body 11.

In addition, according to the first embodiment, in the repair patch 20 of FIG. 2, the bonding layer 23 is provided between the patch body 11 and the expected margin 12. Thus, the patch body 11 and the expected margin 12 can be bonded via the bonding layer 23, while the expected margin 12 can be debonded from the patch body 11 at the time of debonding.

In addition, according to the first embodiment, the taper ratio "L:D" of the inclined surface 13 is defined such that when the thickness D is 1, the length L is not less than 10. Thus, the shape of the patch body 11 can be a shape suitable for recovering the strength of the portion to be repaired 5. In addition, even in such a shape, the occurrence of fiber meandering in the end portion at the edge side of the patch body 11 can be suppressed.

Additionally, according to the first embodiment, the inclined surfaces 13 can be formed in the patch body 11 while strength can be secured by the expected margin 12. Accordingly, the occurrence of fiber meandering in the end portion at the edge side of the patch body 11 can be suppressed. Accordingly, the repair patch 10 having an appropriate shape can be molded.

In addition, according to the first embodiment, in the method for repairing illustrated in FIG. 4, the patch body 11 can be bonded to the portion to be repaired 5 in a state where the end portion at the edge side of the patch body 11 is protected. Accordingly, the patch body 11 can be bonded to the portion to be repaired 5 while the occurrence of fiber meandering in the end portion at the edge side of the patch body 11 is suppressed.

In addition, according to the first embodiment, in the method for repairing illustrated in FIG. 5, depending on the shape of the portion to be repaired 5, the bonding surface 18 including the inclined surfaces 13 of the repair kit 40 can be machined. Accordingly, the bonding surface 18 conforming to the shape of the portion to be repaired 5 can be formed. In addition, the inclined surfaces 13 can be formed in the laminate 30 while strength is secured by the expected margin 12. Accordingly, the occurrence of fiber meandering in the end portion at the edge side of the laminate 30 can be suppressed.

Note that in the first embodiment, the expected margin 12 is peeled from the patch body 11, and thus the expected margin 12 is debonded from the patch body 11; however, for example, the expected margin 12 may be transformed by using a solvent or the like to be easily debonded.

In addition, in the first embodiment, the patch body 11 has a truncated cone shape, but the shape of the patch body 11 is not particularly limited to such a shape. The patch body 11 may have any shape as long as the patch body 11 includes the inclined surfaces 13.

### Second Embodiment

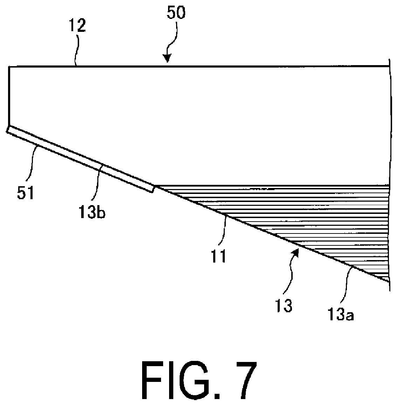

Next, a repair patch 50 according to a second embodiment will be described with reference to FIG. 7. FIG. 7 is a cross-sectional view schematically illustrating an example of the repair patch according to the second embodiment. In the second embodiment, to avoid redundant description, the difference from the first embodiment will be described, and a part including the same configuration as the configuration in the first embodiment will be described with the same reference numerals assigned.

The repair patch 50 of the second embodiment further includes a release layer 51 in the repair patch 10 of the first embodiment. The release layer 51 is provided in an inclined surface 13b of an expected margin 12. The release layer 51 is, for example, an adhesive tape using a fluororesin such as Teflon (registered trademark). At the time of bonding the repair patch 50 to a counterbore 6, the release layer 51 suppresses attachment of a melted resin of a resin sheet 28 to the expected margin 12 and bonding of the expected margin 12 to a portion to be repaired 5.

As described above, according to the second embodiment, bonding of the expected margin 12 to the portion to be repaired 5 can be suppressed by the release layer 51. Note that the release layer 51 is not limited to the adhesive tape described above and may be formed by applying a fluororesin.

### Reference Signs List

5 Portion to be repaired
6 Counterbore
10 Repair patch
11 Patch body
12 Expected margin
13 Inclined surface of repair patch
13a Side surface of patch body
13b Inclined surface of expected margin
14 Top surface
15 Bottom surface
18 Bonding surface
20 Repair patch
23 Bonding layer
28 Resin sheet
30 Laminate
40 Repair kit
50 Repair patch
51 Release layer

## Claims

1. A repair patch (10, 20, 50) for a composite material adapted to repair a portion to be repaired (5) of the composite material, the repair patch (10, 20, 50) comprising:
a patch body (11) including a bonding surface (18) to be bonded to the portion to be repaired (5); and
an expected margin (12) disposed at an opposite side to the bonding surface (18) in a thickness direction of the patch body (11), and being debondable from the patch body (11),
wherein the bonding surface (18) includes an inclined surface (13) inclined outward from the patch body (11) toward the expected margin (12) in the thickness direction of the patch body (11),
the inclined surface (13) is formed to extend from the patch body (11) onto the expected margin (12), and
the patch body (11) has a surface bonded to the expected margin (12), the surface being a boundary surface between the patch body (11) and the expected margin (12) that is debondable.

2. The repair patch (10, 20, 50) according to claim 1, wherein the expected margin (12) is made of a peel ply, and the patch body (11) is made of prepregs.

3. The repair patch (10, 20, 50) according to claim 1, further comprising a bonding layer (23) provided between the patch body (11) and the expected margin (12) to bond the patch body (11) and the expected margin (12), and the bonding layer (23) includes an adhesive agent enabling the expected margin (12) to be debonded from the patch body (11) at the time of debonding.

4. The repair patch (10, 20, 50) according to any one of claims 1 to 3, further comprising a release layer (51) provided in the inclined surface (13) formed in the expected margin (12), and the release layer (51) enables debonding of an adhesive (28) used in bonding to the portion to be repaired (5).

5. The repair patch (10, 20, 50) according to any one of claims 1 to 4, wherein:
the boundary surface is the surface orthogonal to the thickness direction, and
a taper ratio of an angle formed by the boundary surface and the inclined surface (13) is expressed as "L:D" where a thickness in the thickness direction of the patch body (11) is D and a length in an in-plane direction along the boundary surface is L, and when the thickness D is 1, the length L is not less than 10.

6. A method for molding a repair patch (10, 20, 50) for a composite material adapted to repair a portion to be repaired (5) of the composite material, the method comprising:
a bonding step (S11) of integrally bonding, to a laminate (30) including a plurality of reinforcing fiber base materials layered on one another in a thickness direction, an expected margin (12) debondable from the laminate (30), such that the expected margin (12) is disposed at one side in the thickness direction of the laminate (30); and
a machining step (S12) of forming an inclined surface (13) inclined outward from the laminate (30) toward the expected margin (12) in the thickness direction,
wherein at the machining step (S12), the inclined surface (13) is formed to extend from the laminate (30) onto the expected margin (12).

7. A composite material repairing method for repairing a portion to be repaired (5) of a composite material, the composite material repairing method in which the repair patch (10, 20, 50) according to any one of claims 1 to 5 is prepared in advance,
the composite material repairing method comprising:
an adhesive arrangement step (S22) of disposing an adhesive (28) in a surface to be bonded of the portion to be repaired (5);
a patch arrangement step (S23) of disposing the bonding surface (18) of the repair patch (10, 20, 50) via the adhesive (28) such that the bonding surface (18) is disposed being opposed to the surface to be bonded;
a bonding step (S24) of bonding the repair patch (10, 20, 50) to the portion to be repaired (5); and
a debonding step (S25) of debonding the expected margin (12) of the repair patch (10, 20, 50) from the patch body (11) .

8. A composite material repairing method for repairing a portion to be repaired (5) of a composite material,
the composite material repairing method comprising, with a repair kit (40) being prepared in advance, and the repair kit (40) including an expected margin (12) debondable from a laminate (30) including a plurality of reinforcing fiber base materials layered on one another in a thickness direction such that the expected margin (12) is bonded to the laminate (30) to be disposed at one side in the thickness direction of the laminate (30):
a machining step (S21) of forming an inclined surface (13) inclined outward from the laminate (30) toward the expected margin (12) in the thickness direction, and forming the inclined surface (13) to extend from the laminate (30) onto the expected margin (12), to form a bonding surface (18) including the inclined surface (13);
an adhesive arrangement step (S22) of disposing an adhesive (28) in a surface to be bonded of the portion to be repaired (5);
a kit arrangement step (S23) of disposing the bonding surface (18) of the repair kit (40) machined in the surface to be bonded via the adhesive (28) such that the bonding surface (18) is disposed being opposed to the surface to be bonded;
a bonding step (S24) of bonding the repair kit (40) to the portion to be repaired (5); and
a debonding step (S25) of debonding the expected margin (12) of the repair kit (40) from the laminate (30).

## Patentansprüche

1. Reparaturpflaster (10, 20, 50) für ein Verbundmaterial, welches zum Reparieren eines zu reparierenden Abschnitts (5) des Verbundmaterials geeignet ist, wobei das Reparaturpflaster (10, 20, 50) umfasst:
einen Pflasterkörper (11), welcher eine mit dem zu reparierenden Abschnitt (5) zu verklebende Klebeoberfläche (18) umfasst; und
einen voraussichtlichen Rand (12), welcher auf einer der Klebeoberfläche (18) gegenüberliegenden Seite in einer Dickenrichtung des Pflasterkörpers (11) angeordnet und von dem Pflasterkörper (11) ablösbar ist,
wobei die Klebeoberfläche (18) eine geneigte Oberfläche (13) umfasst, welche von dem Pflasterkörper (11) in Richtung des voraussichtlichen Randes (12) in der Dickenrichtung des Pflasterkörpers (11) nach außen geneigt ist,
die geneigte Oberfläche (13) derart ausgebildet ist, dass sie sich von dem Pflasterkörper (11) auf den voraussichtlichen Rand (12) erstreckt, und
der Pflasterkörper (11) eine mit dem voraussichtlichen Rand (12) verklebte Oberfläche aufweist, wobei es sich bei der Oberfläche um eine Grenzfläche zwischen dem Pflasterkörper (11) und dem ablösbaren voraussichtlichen Rand (12) handelt.

2. Reparaturpflaster (10, 20, 50) gemäß Anspruch 1, wobei der voraussichtliche Rand (12) aus einem Abreißgewebe besteht und der Pflasterkörper (11) aus Prepregs besteht.

3. Reparaturpflaster (10, 20, 50) gemäß Anspruch 1, weiterhin umfassend eine Klebeschicht (23), welche zwischen dem Pflasterkörper (11) und dem voraussichtlichen Rand (12) bereitgestellt ist, um den Pflasterkörper (11) mit dem voraussichtlichen Rand (12) zu verkleben, wobei die Klebeschicht (23) ein Haftmittel umfasst, welches es dem voraussichtlichen Rand (12) ermöglicht, zum Ablösezeitpunkt von dem Pflasterkörper (11) abgelöst zu werden.

4. Reparaturpflaster (10, 20, 50) gemäß einem der Ansprüche 1 bis 3, weiterhin umfassend eine Trennschicht (51), welche in der in dem voraussichtlichen Rand (12) ausgebildeten geneigten Oberfläche (13) bereitgestellt ist, wobei die Trennschicht (51) das Ablösen eines beim Verkleben des zu reparierenden Abschnitts (5) verwendeten Haftmittels (28) ermöglicht.

5. Reparaturpflaster (10, 20, 50) gemäß einem der Ansprüche 1 bis 4, wobei:
es sich bei der Grenzfläche um die Fläche orthogonal zur Dickenrichtung handelt, und
das Verjüngungsverhältnis eines von der Grenzfläche und der geneigten Oberfläche (13) ausgebildeten Winkels als "L:D" angegeben wird, wobei D für eine Dicke in der Dickenrichtung des Pflasterkörpers (11) steht und L für eine Länge in einer auf gleicher Ebene befindlichen Richtung entlang der Grenzfläche steht, und wobei, wenn die Dicke D gleich 1 beträgt, die Länge L nicht weniger als 10 beträgt.

6. Verfahren zum Formen eines Reparaturpflasters (10, 20, 50) für ein Verbundmaterial, welches zum Reparieren eines zu reparierenden Abschnitts (5) des Verbundmaterials geeignet ist, wobei das Verfahren umfasst:
einen Klebeschritt (S11) in Form des integralen Verklebens eines Laminats (30), welches eine Vielzahl von in einer Dickenrichtung übereinander geschichteten Verstärkungsfaserbasismaterialien umfasst, mit einem von dem Laminat (30) ablösbaren voraussichtlichen Rand (12), so dass der voraussichtliche Rand (12) an einer Seite in der Dickenrichtung des Laminats (30) angeordnet ist; und
einen Bearbeitungsschritt (S12) in Form des Ausbildens einer geneigten Oberfläche (13), welche von dem Laminat (30) in Richtung des voraussichtlichen Randes (12) in der Dickenrichtung nach außen geneigt ist,
wobei die geneigte Oberfläche (13) im Rahmen des Bearbeitungsschritts (S12) derart ausgebildet wird, dass sie sich von dem Laminat (30) auf den voraussichtlichen Rand (12) erstreckt.

7. Verbundmaterialreparaturverfahren zum Reparieren eines zu reparierenden Abschnitts (5) eines Verbundmaterials, wobei im Rahmen des Verbundmaterialreparaturverfahrens das Reparaturpflaster (10, 20, 50) gemäß einem der Ansprüche 1 bis 5 vorab hergestellt wird,
wobei das Verbundmaterialreparaturverfahren umfasst:
einen Haftmittelanordnungsschritt (S22) in Form des Anordnens eines Haftmittels (28) in einer mit dem zu reparierenden Abschnitt (5) zu verklebenden Oberfläche;
einen Pflasteranordnungsschritt (S23) in Form des Anordnens der Klebeoberfläche (18) des Reparaturpflasters (10, 20, 50) mithilfe des Haftmittels (28), so dass die Klebeoberfläche (18) der zu verklebenden Oberfläche gegenüberliegt;
einen Klebeschritt (S24) in Form des Verklebens des Reparaturpflasters (10, 20, 50) mit dem zu reparierenden Abschnitt (5); und
einen Ablöseschritt (S25) in Form des Ablösens des voraussichtlichen Randes (12) des Reparaturpflasters (10, 20, 50) von dem Pflasterkörper (11).

8. Verbundmaterialreparaturverfahren zum Reparieren eines zu reparierenden Abschnitts (5) eines Verbundmaterials,
wobei das Verbundmaterialreparaturverfahren, unter Verwendung eines Reparaturkits (40), der vorab hergestellt wird und einen von einem Laminat (30), welches eine Vielzahl von in einer Dickenrichtung übereinander geschichteten Verstärkungsfaserbasismaterialien umfasst, ablösbaren voraussichtlichen Rand (12) umfasst, so dass der voraussichtliche Rand (12) mit dem an einer Seite in der Dickenrichtung des Laminats (30) anzuordnenden Laminat (30) verklebt wird, umfasst:
einen Bearbeitungsschritt (S12) in Form des Ausbildens einer geneigten Oberfläche (13), welche von dem Laminat (30) in Richtung des voraussichtlichen Randes (12) in der Dickenrichtung nach außen geneigt ist, sowie des Ausbildens der geneigten Oberfläche (13) in einer Art und Weise, dass sie sich von dem Laminat (30) auf den voraussichtlichen Rand (12) erstreckt, um eine die geneigte Oberfläche (13) umfassende Klebeoberfläche (18) auszubilden;
einen Haftmittelanordnungsschritt (S22) in Form des Anordnens eines Haftmittels (28) in einer mit dem zu reparierenden Abschnitt (5) zu verklebenden Oberfläche;
einen Kitanordnungsschritt (S23) in Form des Anordnens der Klebeoberfläche (18) des Reparaturkits (40), welche in die mithilfe des Haftmittels (28) zu verklebende Oberfläche eingearbeitet ist, so dass die Klebeoberfläche (18) der zu verklebenden Oberfläche gegenüberliegt;
einen Klebeschritt (S24) in Form des Verklebens des Reparaturkits (40) mit dem zu reparierenden Abschnitt (5); und
einen Ablöseschritt (S25) in Form des Ablösens des voraussichtlichen Randes (12) des Reparaturkits (40) von dem Laminat (30).

## Revendications

1. Pièce de réparation (10, 20, 50) pour un matériau composite apte à réparer une partie à réparer (5) du matériau composite, la pièce de réparation (10, 20, 50) comprenant :
un corps de pièce (11) comportant une surface de collage (18) à coller à la partie à réparer (5) ; et
une bordure prévue (12) disposée d'un côté opposé à la surface de collage (18) dans une direction d'épaisseur du corps de pièce (11), et décollable du corps de pièce (11),
dans laquelle la surface de collage (18) comporte une surface inclinée (13) qui est inclinée vers l'extérieur depuis le corps de pièce (11) vers la bordure prévue (12) dans la direction d'épaisseur du corps de pièce (11),
la surface inclinée (13) est formée pour s'étendre depuis le corps de pièce (11) sur la bordure prévue (12), et
le corps de pièce (11) a une surface collée à la bordure prévue (12), la surface étant une surface de frontière entre le corps de pièce (11) et la bordure prévue (12) qui est décollable.

2. Pièce de réparation (10, 20, 50) selon la revendication 1, dans laquelle la bordure prévue (12) est constituée d'un pli pelliculable, et le corps de pièce (11) est constitué de préimprégnés.

3. Pièce de réparation (10, 20, 50) selon la revendication 1, comprenant en outre une couche de collage (23) fournie entre le corps de pièce (11) et la bordure prévue (12) pour coller le corps de pièce (11) et la bordure prévue (12), et la couche de collage (23) comporte un agent adhésif permettant de décoller la bordure prévue (12) du corps de pièce (11) au stade du décollage.

4. Pièce de réparation (10, 20, 50) selon l'une quelconque des revendications 1 à 3, comprenant en outre une couche antiadhésive (51) fournie dans la surface inclinée (13) formée dans la bordure prévue (12), et la couche antiadhésive (51) permet le décollage d'un adhésif (28) utilisé dans le collage sur la partie à réparer (5).

5. Pièce de réparation (10, 20, 50) selon l'une quelconque des revendications 1 à 4, dans laquelle :
la surface de frontière est la surface orthogonale à la direction d'épaisseur, et
un rapport d'effilement d'un angle formé par la surface de frontière et la surface inclinée (13) est exprimé par « L:D », où une épaisseur dans la direction d'épaisseur du corps de pièce (11) est D et une longueur dans une direction en plan le long de la surface de frontière est L et, lorsque l'épaisseur D est 1, la longueur L n'est pas moins de 10.

6. Procédé de moulage d'une pièce de réparation (10, 20, 50) pour un matériau composite apte à réparer une partie à réparer (5) du matériau composite, le procédé comprenant :
une étape de collage (S11) pour coller intégralement, à un stratifié (30) comportant une pluralité de matériaux de base à fibres de renforcement stratifiés l'un sur l'autre dans une direction d'épaisseur, une bordure prévue (12) décollable du stratifié (30), de sorte que la bordure prévue (12) soit disposée d'un côté dans la direction d'épaisseur du stratifié (30) ; et
une étape d'usinage (S12) pour former une surface inclinée (13) qui est inclinée vers l'extérieur depuis le stratifié (30) vers la bordure prévue (12) dans la direction d'épaisseur,
dans lequel, à l'étape d'usinage (S12), la surface inclinée (13) est formée pour s'étendre depuis le stratifié (30) sur la bordure prévue (12).

7. Procédé de réparation de matériau composite pour réparer une partie à réparer (5) d'un matériau composite, la pièce de réparation (10, 20, 50) selon l'une quelconque des revendications 1 à 5 étant préparée à l'avance dans le procédé de réparation de matériau composite,
le procédé de réparation de matériau composite comprenant :
une étape d'agencement d'adhésif (S22) pour disposer un adhésif (28) dans une surface à coller de la partie à réparer (5) ;
une étape d'agencement de pièce (S23) pour disposer la surface de collage (18) de la pièce de réparation (10, 20, 50) par l'intermédiaire de l'adhésif (28) de sorte que la surface de collage (18) soit disposée à l'opposé de la surface à coller ;
une étape de collage (S24) pour coller la pièce de réparation (10, 20, 50) sur la partie à réparer (5) ; et
une étape de décollage (S25) pour décoller la bordure prévue (12) de la pièce de réparation (10, 20, 50) du corps de pièce (11).

8. Procédé de réparation de matériau composite pour réparer une partie à réparer (5) d'un matériau composite,
le procédé de réparation de matériau composite comprenant,
avec un kit de réparation (40) préparé à l'avance, le kit de réparation (40) comportant une bordure prévue (12) décollable d'un stratifié (30) comportant une pluralité de matériaux de base à fibres de renforcement stratifiés l'un sur l'autre dans une direction d'épaisseur de sorte que la bordure prévue (12) soit collée sur le stratifié (30) pour être disposée d'un côté dans la direction d'épaisseur du stratifié (30) :
une étape d'usinage (S21) pour former une surface inclinée (13) qui est inclinée vers l'extérieur depuis le stratifié (30) vers la bordure prévue (12) dans la direction d'épaisseur, et pour former la surface inclinée (13) pour qu'elle s'étende depuis le stratifié (30) sur la bordure prévue (12), afin de former une surface de collage (18) comportant la surface inclinée (13) ;
une étape d'agencement d'adhésif (S22) pour disposer un adhésif (28) dans une surface à coller de la partie à réparer (5) ;
une étape d'agencement de kit (S23) pour disposer la surface de collage (18) du kit de réparation (40) usiné dans la surface à coller par l'intermédiaire de l'adhésif (28) de sorte que la surface de collage (18) soit disposée à l'opposé de la surface à coller ;
une étape de collage (S24) pour coller le kit de réparation (40) sur la partie à réparer (5) ; et
une étape de décollage (S25) pour décoller la bordure prévue (12) du kit de réparation (40) du stratifié (30).
